# EUROPEAN PATENT APPLICATION

(11) **EP 0 762 007 A1**
(43) Date of publication of application: **12.03.1997**
(21) Application number: 96306011.6
(22) Date of filing: 16.08.1996
(51) Int. Cl.: F16D 65/60

(54) **Slack adjustor for vehicle brake**

(30) Priority: 17.08.1995 GB 9516891; 15.11.1995 GB 9523329
(71) Applicant: GRAU LIMITED, Redditch, Worcestershire B98 9HA (GB)
(72) Inventor: Broome, William Sidney, Inkberrow, Worcestershire WR7 4EJ (GB)
(74) Representative: Leach, John Nigel

(57) **Abstract**

An operating assembly for a vehicle brake, incorporating an automatic slack adjustor, having a worm wheel element (13) connected to an output member (14) for operating a brake, engaged by a worm element (20) carried by an input member (10), the worm element (20) being rotatable about its axis in response to movement of the input member (10) relative to a fixed datum, has the worm element (20) movable along its axis (20a) to disengage a means (26-34) rotating the worm element when brake-applying force exceeds a predetermined value. The worm element (20) is accommodated in a recess (16) in the input member (10) and can be fitted therein and engaged with the worm element transversely by movement parallel to the axis of the worm wheel element (13).

## Description

This invention relates to an operating assembly for a vehicle brake incorporating what is generally termed an automatic slack adjuster.

The invention has been devised for use with a vehicle brake of the so-called "S-cam" type in which an angularly movable brake operating member carries a somewhat S-shaped cam which causes shoes bearing brake linings to be moved outwardly into engagement with a brake drum.

Efficient operation of vehicle brakes requires that at each brake there should be the correct amount of slack, i.e. a certain amount of movement of the actuator (e.g. a pneumatic actuator) which applies the brake should be possible before the brake is actually applied. If the amount of such slack is too great, then brake actuation might be delayed when required and/or not take place with the full required force, while if the slack is insufficient the brake might bind, i.e. not release properly. In this latter condition, brake overheating might take place and under extreme conditions it is possible even for brake linings to catch fire.

Automatic slack adjusters are known. However, they have disadvantages. One such disadvantage arises from the fact that although theoretically all brake components are rigid and once brake shoes are in contact with the brake drum little or no further actuator movement is required to increase the force with which the shoes contact the drum, in practice this is not the case and substantial further actuator movement might be possible after the brake shoes have initially been brought into contact with the drum. This is particularly the case when brake shoes have new linings which have not yet "bedded in".

One known form of automatic slack adjuster operates solely in dependence on the range of movement of a brake operating member, but fails to distinguish between the amount of movement which corresponds to genuine clearance or slack and that which is due to the flexibility of the various components of the brake. If an adjuster operates automatically in dependence on the range of movement, it can cause the operating clearance to be reduced to too low a value with the possibility then of brake binding and overheating.

It is broadly the object of the present invention to provide an automatic slack adjuster in an angularly movable brake operating member, in which this disadvantage is overcome or reduced.

According to a first aspect of the invention we provide a brake operating assembly comprising: an input member for connection to a brake actuator; an output member for connection to a brake operating member, angularly movable about a brake-operating axis, said input member and output member being relatively angularly movable about said brake-operating axis; and adjustment means providing a connection between said input member and output member and providing for angular adjustment therebetween about said brake-operating axis, said adjustment means comprising:
a worm wheel element connected to said output member;
a worm element meshing with said worm wheel element, said worm element being carried by said input member for rotation about a worm axis;
means operable to cause rotational movement of said worm element about its axis, in response to movement of the input member about the brake-operating axis relative to a fixed datum;
said worm element being movable along said worm axis relative to said input member whereby it is unable to be rotated by said means for causing rotation thereof.

Preferably the worm element is movable along said worm axis to disengage it from said means for causing rotation of the worm element against a force exerted by spring biasing means, said movement taking place when a brake-applying force greater than a predetermined value is applied to the input member.

Preferably said means for causing rotational movement of the worm element includes one-way clutch means, and said movement of the worm element against said spring biasing means disengages said one-way clutch means.

Preferably said one-way clutch means comprises opposed members respectively fast with said worm element and movable in response to said movement of the input member relative to a fixed datum, said facing members having opposed ratchet teeth.

Preferably said worm element is accommodated in a recess formation in the input member, and is able to be placed into said recess formation in engagement with said worm wheel element by movement of the worm element in a direction parallel to said brake-operating axis.

According to another aspect of the invention, we provide a brake operating assembly comprising an input member for connection to a brake actuator; an output member for connection to a brake operating member angularly movable about a brake-operating axis; said input member and output member being relatively angularly movable about said brake operating axis; and adjustment means providing a connection between said input member and output member and providing for angular adjustment between about said brake-operating axis, said adjustment means comprising:
a worm wheel element connected to said output member;
a worm element meshing with said worm wheel element, said worm element being accommodated in a recess formation in said input member;
said worm element being able to be entered in said recess formation by movement thereof in a direction parallel to the brake-operating axis.

This arrangement of worm element and worm wheel element provides for much simpler assembly thereof and enable a freedom of design in respect of the worm element which is not available with conventional worm and wheel arrangements in which the worm has to be assembled by movement thereof in the direction along the worm axis.

A brake operating assembly in accordance with this aspect of the invention may have any or all of the features of construction and/or operation herein set forth in relation to the first aspect of the invention.

The invention will now be described by way of example with reference to the accompanying drawings, of which:
FIGURE 1 is a diagrammatic part-sectional elevation of a brake-operating assembly in accordance with the invention;
FIGURE 2 is a more detailed section through part of the assembly of Figure 1;
FIGURE 3 is a transverse part-section through the brake-operating assembly;
FIGURE 4 is a perspective view of part of the assembly.

Referring to the drawings, a brake operating assembly is intended to provide an operative connection, incorporating an automatic slack adjuster, between a brake actuator and a brake operating member, which latter is in the form of the operating shaft of an S-cam type of brake. Drum brakes of the S-cam type, in which the brake-operating shaft carries a somewhat S-shaped cam which operates on a pair of brake shoes to move them outwardly from one another into engagement with a brake drum, are well known and widely used, particularly on commercial vehicles. The brake-operating assembly described hereafter is intended to provide a connection between the operating shaft of such a brake and a brake actuator such as a pneumatic actuator which provides a linear output.

The brake-operating assembly comprises an input member 10 comprising an input lever portion 11 and an enlarged body at its end. The body, indicated at 12, supports within it an output member in the form of a worm wheel element 13 which has a bore 14 with splines for torque transmitting connection to a brake-operating shaft. The worm wheel 13 is rotatable within the body portion 12 about axis 15.

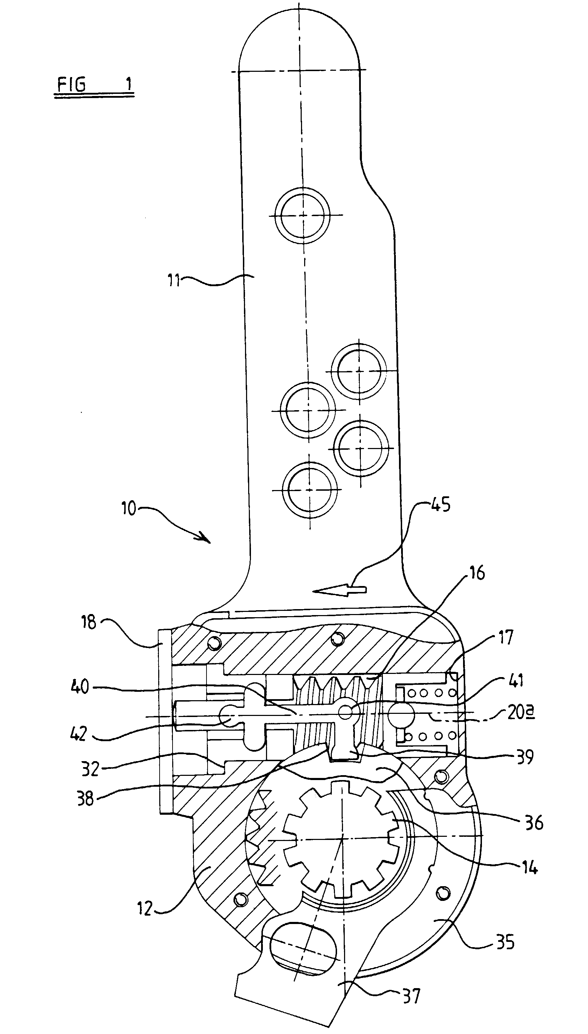

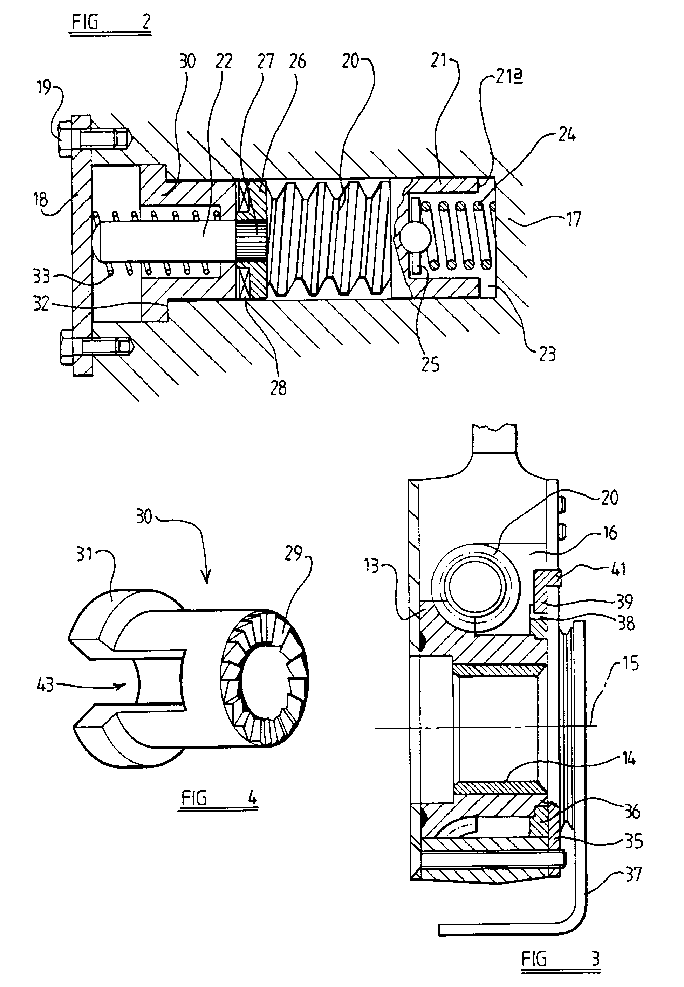

A recess 16 is provided in the body part 12 of the input member 10 and the recess extends tangentially relative to the axis 15. The recess is closed at one end by an end wall 17 and at its opposite end it is closed by a closure cap 18 attached by bolts 19. The recess 16 accommodates a worm gear element 20 which is rotatable within the recess about a worm axis 20a and meshes with the worm wheel element 13 as visible in Figure 3. At one end, the worm element 20 has a sleeve 21 which extends towards the end wall 17 and at its other end the worm element 20 has a shaft 22 which extends towards the cap 18. The overall length of the worm element 20 together with its sleeve 21 and shaft 22 is such that a small amount of movement of the worm in the direction of the worm axis is possible within the recess 16: in Figure 2 the worm element is shown in a position in which there is a space 23 between an end surface 21a of the sleeve 21 and the end wall 17. A compression spring 24 and thrust washer 25 bias the worm element axially within the recess to this position.

Adjacent the worm element 20 the shaft 22 has pressed thereon a collar 26. The collar 26, which is rotationally fast with the worm element 20 (which condition may be ensured by the provision of serrations 27 on the shaft 22) is provided with ratchet teeth 28 which face complementary ratchet teeth 29 provided on an adjustment member 30 which is shown in Figure 4. The adjustment member 30 is rotationally and axially movable on the shaft 22 and within the recess 16 and has its axial movement in the direction towards the worm element 20 limited by stop means in the form of a flange 31 co-operable with an abutment face 32 within the recess. A compression spring 33 biases the adjustment member towards the worm element so that its ratchet teeth 29 engage the teeth 28 on the collar 26. The arrangement of the ratchet teeth 28, 29 is such as to act as a one-way clutch so that rotational movement of the adjustment member 30 in one sense within the recess 16 will cause corresponding rotational movement of the worm element 20 while rotational movement of the adjustment member 30 in the opposite sense will not move the worm element but the teeth 28, 29 will simply ride over one another.

The recess 16 in which the worm element 20 and associated components are accommodated is open towards the front of the body part 12 being closed by a cover plate 35. The cover plate 35 supports, for angular movement about axis 15, a control disc 36. The control disc 36 is connected, outside the body part 12, to a control lever 37 which is arranged to be connected to a stationary component such as, for example, an axle part. Adjacent the worm element 20, the control disc 36 has a notch 38 in its periphery and this is engaged by an end portion 39 of a somewhat L-shaped adjustment lever 40. The lever 40 has a pivot pin 41 supported in the cover plate 35 so that the lever 40 is pivotable about the axis of pin 41. The end of lever 40 remote from its portion 39 has a formation 42 which engages in a slot 43 extending axially of the adjustment member 30 from the flanged end thereof. The result is that relative angular movement between the control disc 36 and the body 12 causes angular movement of the adjustment member 30 about the axis of the worm element 20: It will be appreciated that reciprocating such angular movement of the control disc 36 will cause a rotation of the worm element 20 by virtue of the one-way clutch connection between the worm element and the adjustment member 30.

In use, when the brake actuator which is connected to lever 11 is brought into operation it causes the lever 11 to move angularly about the axis 15 in the direction of arrow 45. Initially the worm wheel element 13 is rotated with the lever 11 without compression of the spring 24 since there is relatively little or no resistance to rotation of the brake operating shaft and thus no compression of the spring 24. Of course, the rate of the spring 24 is chosen so that it can resist such torque which opposes rotation of the brake operating shaft during this initial phase of operation in which the brake shoes are moved into initial engagement with the brake drum. Such rotation of the lever 11 causes rotation of the adjustment lever 40 to cause angular movement of the adjustment member 30 relative to the worm element 20, which at this stage does not rotate, due to ratcheting of the teeth 29 of the attachment member past the teeth 28 on the collar. When the resistance to movement of the lever 11 increases after taking up the initial slack, the torque required to turn the worm wheel element 13 increases above the force required to compress the spring 24 and thus the worm element 20 moves axially within the recess 16, against the force exerted by biasing spring 24. Accordingly the teeth 28, 29 are disengaged and further rotation of the lever 11 causes further rotation of the adjustment member 30 but with the teeth 28, 29 disengaged. If the torque is sufficiently high the spring 24 is compressed sufficiently to bring the end surface 20a of the worm 21 into engagement with the end wall 17 so that further rotation of the lever 11 is transmitted to the worm wheel element 13 to fully apply the brakes. Again, further rotation of the adjustment member 30 may take place with the teeth 28, 29 disengaged.

When the brake is released and the lever 11 moved in the opposite direction, in the course of such movement the worm element 20 remains displaced against the spring 24 until the force acting thereon has reduced to a level less than the force exerted by the spring. The worm element then returns to the position is which it is illustrated in Figure 2, in which the teeth 28 on collar 26 are re-engaged with the teeth 29 on the adjustment member. In the course of releasing movement of the lever, relative movement between it and the control disc 36 causes pivoting of the lever 40 and hence angular return movement of the adjustment member 30. Initially such angular return movement occurs whilst the teeth 28 are not engaged with the teeth 29 and so no rotation to adjust the slack occurs. When the teeth 28 have re-engaged with the teeth 29 the continuing angular return movement of the adjustment member 30 which causes rotational movement of the worm element 20. Such movement of the worm element 20 causes movement of the worm wheel elements 13 about the axis 15, to adjust the brake to compensate for clearance therein.

The movement of the worm element 20 against spring 24 to disengage it from the adjustment member 30 has the effect that only true slack in the system is compensated for. Stiffness due to friction in the brake-operating system, for example, does not cause adjustment to take place because the rate of the spring 24 is arranged so that the worm moves axially to disengage the teeth 28, 29 when resistance to turning increases above a predetermined level, namely that resistance which is in excess of that which is required to take up true slack.

It will further be noted from the Figure 3 of the drawings that the worm wheel element 13 engages the worm element 20 only over approximately one quarter of the periphery of the latter. This enables the worm element and associated parts to be fitted into the recess 16 in the body 12 by movement thereof in a direction parallel to the axis 15 of the worm wheel element. It will be appreciated that the worm element 20 cannot be fed into the recess 16 in the direction of the worm axis and tangentially to the axis 15, because of the sleeve 21 on the end of the worm element 20 which would prevent such movement.

To provide for manual adjustment of brake clearance, in addition to the automatic adjustment above described, the shaft 22 of the worm element 20 may be extended to protrude through the cap 18 to be engagable by a suitable tool for rotating the worm element.

The features disclosed in the foregoing description, or the accompanying drawings, expressed in their specific forms or in terms of a means for performing the disclosed function, or a method or process for attaining the disclosed result, as appropriate, may, separately or in any combination of such features, be utilised for realising the invention in diverse forms thereof.

## Claims

1. A brake operating assembly comprising: an input member (10) for connection to a brake actuator; an output member (13,14) for connection to a brake operating member, angularly movable about a brake-operating axis (15), said input member and output member being relatively angularly movable about said brake-operating axis; and adjustment means providing a connection between said input member and output member and providing for angular adjustment therebetween about said brake-operating axis, said adjustment means comprising:
a worm wheel element (13) connected to said output member;
a worm element (20) meshing with said worm wheel element (13), said worm element being carried by said input member (10) for rotation about a worm axis (20a);
means (26-30) operable to cause rotational movement of said worm element (20) about its axis (20a), in response to movement of the input member (10) about the brake-operating axis (15) relative to a fixed datum (37);
said worm element (20) being movable along said worm axis (20a) relative to said input member (10) whereby it is unable to be rotated by said means (26-30) for causing rotation thereof.

2. A brake operating assembly according to claim 1 wherein said worm element (20) is movable along said worm axis (20a), against a force exerted by spring biasing means (24), said movement taking place when a brake-applying force greater than a predetermined value is applied to the input member 10).

3. A brake operating assembly according to claim 1 or claim 2 wherein said worm element (20) is accommodated in a recess formation (16) in the input member (10), and is able to be placed in said recess formation in engagement with said worm wheel element (13) by movement of the worm element (20) in a direction generally parallel to said brake-operating axis (15).

4. A brake operating assembly according to any one of the preceding claims wherein means for causing rotational movement of the worm element includes one-way clutch means (26,28,29,30), said movement of the worm element against said spring biasing means disengages said one-way clutch means.

5. A brake operating assembly according to claim 4 wherein said one-way clutch means comprises opposed members (26,30) respectively fast with said worm element and movable in response to said movement of the input member relative to a fixed datum, said facing members (26,30) having opposed ratchet teeth (28,29).

6. A brake operating assembly according to claim 5 wherein said member (30) movable in response to said movement of the input member relative to a fixed datum is urged towards said member (26) fast with said worm element by spring biasing means (33), and its movement is limited by stop means (31,32).

7. A brake operating assembly according to claim 6 wherein said member (30) is movable angularly about said worm axis (20a) in accordance with movement of the input member (10) about the brake operating axis (15) relative to a fixed datum (37), by way of an adjustment lever (40).

8. A brake operating assembly according to claim 7 wherein said adjustment lever (40) comprises formations (39,42) engaging, respectively, a formation (38) on a member (36) held relative to said fixed datum (37), and a formation (43) in said member (30).

9. A brake operating assembly according to claim 8 wherein said adjustment lever (40) is pivotable by a pivot pin (41) disposed between said formations (39,42) thereof.

10. A brake operating assembly according to claim 9 as appendant to claim 3 wherein said pivot pin (41) is supported in a cover plate (35) of said recess.

11. A brake operating assembly comprising an input member (10) for connection to a brake actuator; an output member (13,14) for connection to a brake operating member angularly movable about a brake-operating axis (15); said input member and output member being relatively angularly movable about said brake operating axis; and adjustment means providing a connection between said input member and output member and providing for angular adjustment between about said brake-operating axis, said adjustment means comprising:
a worm wheel element (13) connected to said output member;
a worm element (20) meshing with said worm wheel element, said worm element being accommodated in a recess formation (16) in said input member (10);
said worm element (20) being able to be entered in said recess formation (16) by movement thereof in a direction parallel to the brake-operating axis (15).
